# EUROPEAN PATENT SPECIFICATION

(11) **EP 3 210 809 B1**
(45) Date of publication and mention of the grant of the patent: **26.09.2018**
(21) Application number: 17157229.0
(22) Date of filing: 21.02.2017
(51) Int. Cl.: B60K 5/02, B60K 7/00, A01D 34/86, B60K 5/00, B60K 11/04, B60K 13/04

(54) **SELF-PROPELLED VEHICLE CONFIGURED TO BE EQUIPPED WITH OPERATING TOOLS**
SELBSTFAHRENDES FAHRZEUG, DAS ZUR AUSRÜSTUNG MIT ARBEITSWERKZEUGEN KONFIGURIERT IST
VÉHICULE AUTOMOTEUR CONÇU POUR ÊTRE ÉQUIPÉ D'OUTILS DE TRAVAIL

(30) Priority: 22.02.2016 IT UB20160931
(43) Date of publication of application: 30.08.2017
(73) Proprietor: Energreen S.r.l., 36026 Cagnano di Pojana Maggiore (VI) (IT)
(72) Inventor: FRARON, Ivo, 36040 ORGIANO (VI) (IT)
(74) Representative: Marchioro, Paolo

(56) References cited:
- EP-A1- 2 404 811
- EP-A1- 2 878 186
- US-A1- 2004 040 137

## Description

The present invention regards a self-propelled vehicle configured to be equipped with operating tools with the aim of being used as a vehicle for clearing the roadside, for the maintenance of water supply systems, canal basins or as a farming tractor for mowing or, generally, working on farming land.

The use of self-propelled vehicles for performing mowing operations or operations of another type on roadsides or farming land is known.

In particular, a first type of self-propelled vehicles used for performing the aforementioned operations are farming tractors of the common type to which special operating tools are attached.

However, the fact that the aforementioned farming tractors are not specifically designed and manufactured to perform the aforementioned roadside clearing and maintenance operations entails greater difficulty at performing the same.

In particular, the structure and the dimensions of the farming tractors of the common type complicate the control thereof when performing the aforementioned clearing operations, do not enable the operator to enjoy a good view of the ground on which he is required to operate and, furthermore, do not enable obtaining suitable balancing of the farming tractors during such specific uses.

Thus, with the aim of overcoming the aforementioned drawbacks, there is currently the trend of proposing - in the market - vehicles specifically conceived and designed to perform the aforementioned clearing and maintenance operations.

In particular, such vehicles substantially have a lowered centre of gravity with respect to farming tractors of the prior art and they are already predisposed to support the special operating tools suitable to perform such specific operations.

In particular, the self-propelled vehicles of the latter type are structured so as to provide for the use of the aforementioned operating tools in a lateral position with respect to the vehicles.

In spite of this, the structure and conformation of the latter vehicles of the prior art do not enable the operators to optimally control the same. In detail, such drawback is basically caused, even in this case, by an inappropriate balancing of the latter type of self-propelled vehicles of the prior art.

Furthermore, disadvantageously the aforementioned vehicles of the prior art have an excessively heavy structure mainly due to the complexity and the overall dimension of the driving unit installed thereon.

A self-propelled vehicle according to the preamble of claim 1 is known from EP 2 404 811 A1.

The aim of the present invention is to overcome all the aforementioned drawbacks.

In particular, one of the objects of the invention is to provide a self-propelled vehicle capable of enabling an easier control by the operator.

Even more in detail, an object of the invention is to provide a self-propelled vehicle having a better balancing with respect to the vehicles of the prior art.

A further object of the invention is to provide a self-propelled vehicle, that is lighter and has a less complex structure with respect to the self-propelled vehicles of the prior art.

In particular, an object of the invention is to provide a self-propelled vehicle with a smaller wheelbase with respect to the vehicles of the prior art.

The aforementioned objects are attained by providing a self-propelled vehicle according to claim 1.

Further characteristics of the self-propelled vehicle of the invention are outlined in the dependent claims.

The aforementioned objects and advantages to be outlined hereinafter will be apparent from the description of some preferred embodiments of the invention provided by way of non-limiting example with reference to the attached drawings wherein:
- fig. 1 shows an axonometric view of the self-propelled vehicle of the invention;
- fig. 2 shows the self-propelled vehicle of the invention according to a lateral view;
- fig. 3 shows an axonometric view of the chassis of the self-propelled vehicle of the invention;
- fig. 4 shows, according to a lateral view, the chassis of fig. 3 on which the internal components of the self-propelled vehicle of the invention are installed;
- fig. 5 shows, according to the top view, the chassis of fig. 3 on which the internal components of the self-propelled vehicle of the invention are installed.

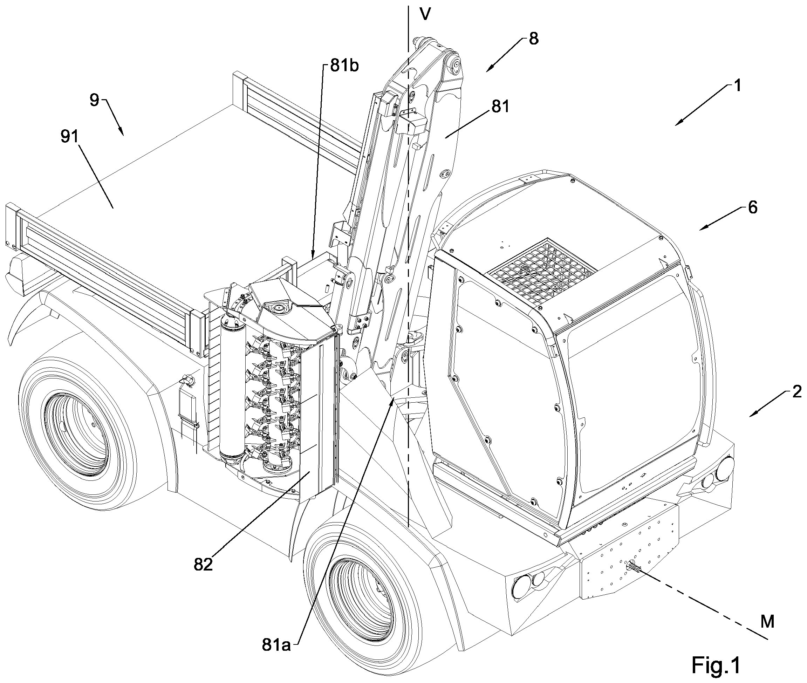

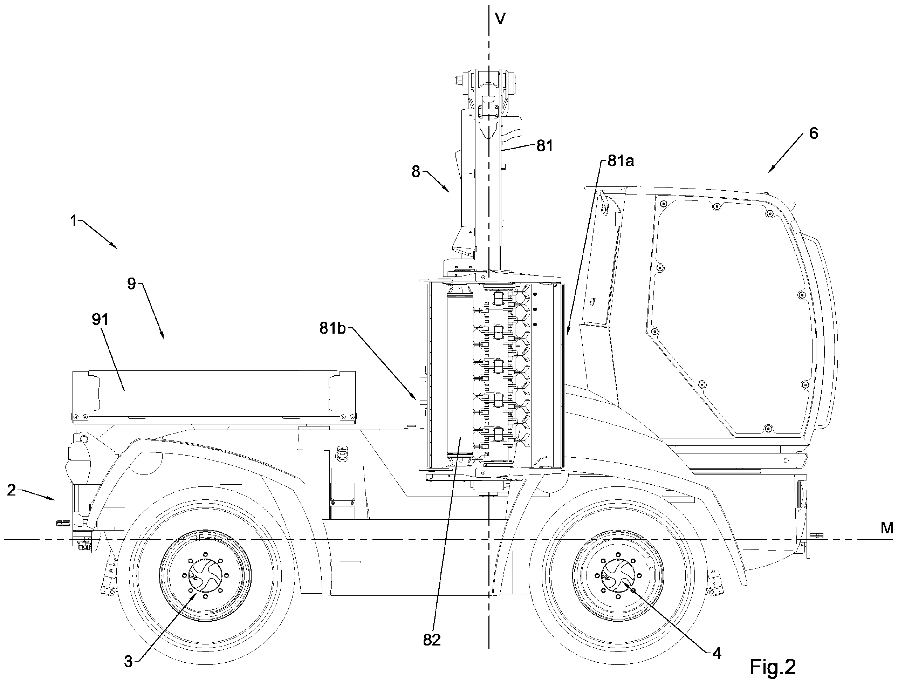

The self-propelled vehicle of the invention, configured to be equipped with operating tools with the aim of performing the aforementioned maintenance operations, is represented in figs. 1 and 2 where it is indicated in its entirety with **1.**

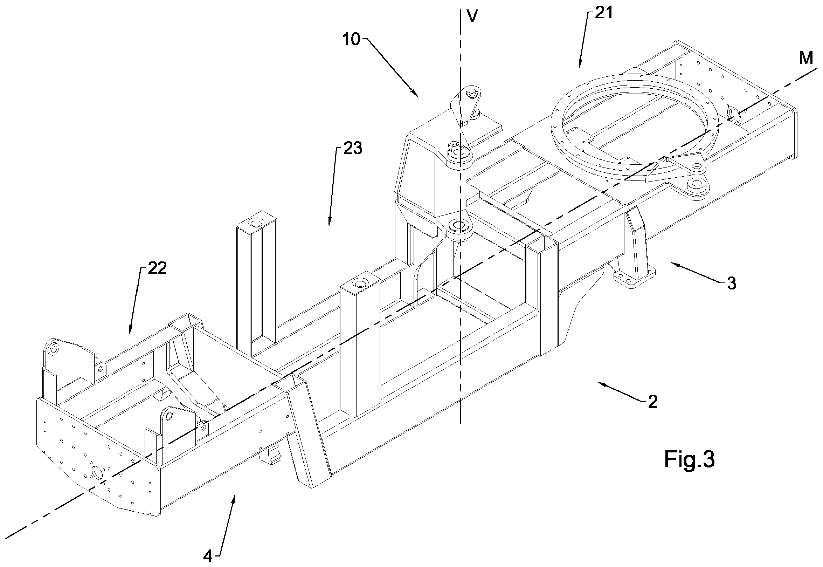

As observable in fig. 2, the vehicle **1** of the invention comprises a chassis **2** provided with a front axle **3** and a rear axle **4.** Furthermore, in such chassis **2** there are identified a front part **21,** a rear part **22** and a central part **23,** lowered with respect to the aforementioned front part **21** and the rear part **22,** as clearly observable in fig. 3.

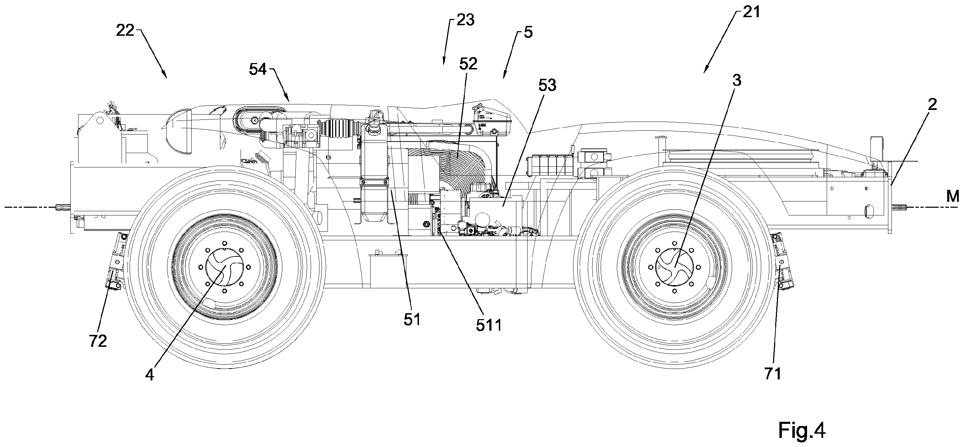

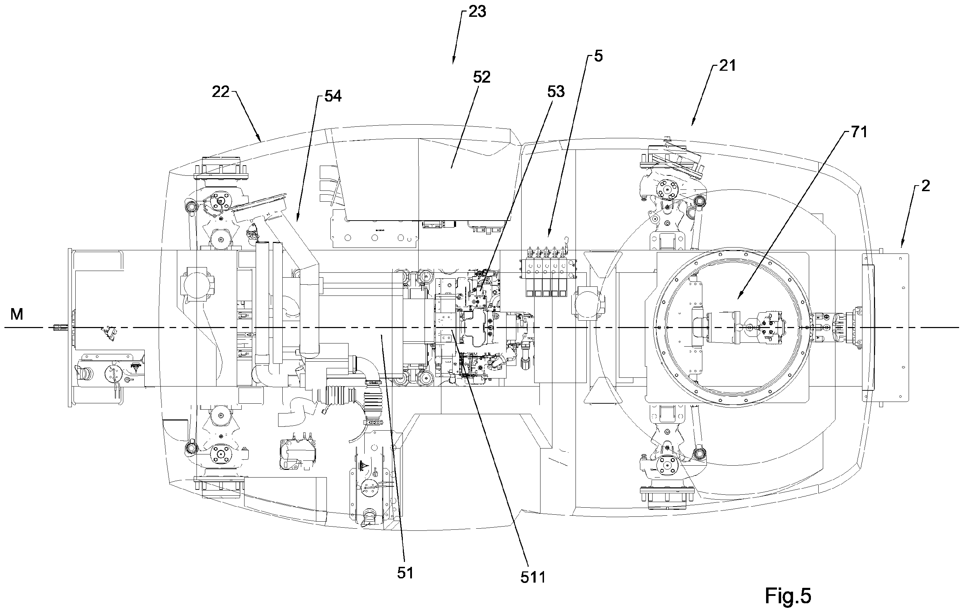

As represented in figs. 4 and 5, the vehicle **1** further comprises a driving unit **5** provided with a main engine **51** suitable to provide for driving at least one of the two front **3** and/or rear **4** axles. Preferably but not necessarily, such main engine **51** is an internal combustion engine.

However, it cannot be ruled out that, according to different embodiments of the invention, the main engine **51** can be an electric engine associated to an appropriate battery pack.

Furthermore, as observable in figs. 1 and 2, the vehicle **1** of the invention is provided with a driver's cabin **6** arranged at the aforementioned front part **21** of the chassis **2.**

According to the invention, the main engine **51** is arranged at the aforementioned central part **23,** along the median axis **M** of the chassis **2.** Furthermore, the invention provides for that each of the front **3** and rear **4** axles be associated and directly driven by a hydraulic motor **71** and **72,** both in turn power-supplied by the main engine **51,** through a pump unit as outlined in detail hereinafter.

The combination of the two characteristics described above enables attaining the aforementioned objects of the invention. As a matter of fact, the presence of a hydraulic motor **71** and **72** for each of the two front **3** and rear **4** axles, both power-supplied by the main engine **51,** enables avoiding the introduction of a universal joint for connection and transmission between the main engine **51** and the aforementioned axles **3** and **4,** with the aim of driving the latter in rotation. Thus, the absence of a universal joint enables defining a free space in which the main engine **51** can be arranged in a lowered position with respect to what is provided for by vehicles of the prior art. As a matter of fact, as observable in figs. 4 and 5, such main engine **51,** according to the invention, is arranged at the aforementioned central part **23** of the chassis **2,** more precisely along the median axis **M** of the chassis **2.** As previously mentioned, such characteristic in turn enables lowering the centre of gravity of the entire vehicle **1,** as well as obtaining greater balancing and greater stability thereof. Furthermore, the absence of the universal joint due to the particular combination of the characteristics of the vehicle **1** of the invention described above enables reducing the wheelbase between the two aforementioned axles **3** and **4** with respect to the wheelbase defined in the vehicles of the prior art. Thus, the latter characteristic contributes towards making the vehicle **1** easier to control, more reactive and more stable with respect to the vehicles of the prior art.

Furthermore, as regards the main engine **51,** according to the preferred embodiment of the vehicle **1** of the invention, it is arranged on the aforementioned chassis **2** so that the rotating shaft **511** is parallel to the median axis **M** of the chassis **2.** The latter characteristic enables further improving the balancing of the vehicle **1** of the invention.

Furthermore, as regards the driving unit **5,** as schematically observable in figs. 4 and 5, it comprises a radiator unit **52** arranged at the central part **23** of the chassis **2,** in a lateral position with respect to the aforementioned median axis **M.** In order to maintain an optimal balancing of the vehicle **1** of the invention, at the aforementioned central area **23,** on the opposite side of the chassis **2** with respect to the one in which the aforementioned radiator unit **52** is present, there is provided for the introduction of the fuel tank in case of an internal combustion engine, of the aforementioned battery pack in case of an electric motor, or of a counterweight in general.

However, it cannot be ruled out that, according to alternative embodiments of the vehicle **1** of the invention, such radiator unit **52** be arranged in a different position on the chassis **2** with respect to the one provided for by the preferred embodiment described above.

As previously mentioned, according to the preferred embodiment of the invention, the driving unit **5** comprises a pump unit **53** arranged at the central part **23** of the chassis **2,** along the median axis **M** of the chassis **2.** In particular, as observable in fig. 5, such pump unit **53** is arranged at the front part with respect to the main engine **51.**

In this context, the expression pump unit **53** is used to indicate the pump or pumps, preferably of the hydraulic driven type, actuated by the aforementioned main engine **51** and suitable to power-supply the aforementioned hydraulic motors **71 and 72**, in turn associated to the front **3** and rear **4** axles.

Also in this case, it cannot be ruled out that, according to different embodiments of the invention, the pump unit **53** be arranged in a different position with respect to what is provided for by the preferred embodiment of the invention.

Still, as regards the driving unit **5,** as observable in figs. 4 and 5, it further comprises an engine exhaust unit **54** arranged at the rear part of the chassis **2,** along the median axis **M** of the latter. In other words, also the engine exhaust unit **54,** just like the pump unit **53,** according to the preferred embodiment of the invention, is aligned with the main engine **51** along the aforementioned median axis **M.** Thus, the balancing of the vehicle **1** is maintained at an optimal condition. Thus, such further characteristic enables optimising the stability of the vehicle **1** and facilitate the control thereof.

It cannot be ruled out that, according to alternative embodiments of the invention, the engine exhaust unit **54** be misaligned along the median axis **M.**

Specifically, the expression engine exhaust unit **54,** in the common use and in the current context, is used to indicate the system connected to the main engine **51** of the internal combustion type configured to evacuate exhaust gases.

As regards fixing the operating tools, according to the preferred embodiment of the invention, the vehicle **1** comprises, at the front part **21** of the chassis **2** and at the rear part with respect to the driver's cabin **6,** a support frame **10.** In particular, such support frame **10,** according to the preferred embodiment of the invention, is arranged along the median axis **M** of the chassis **2,** thus aligned with the main engine **51,** the pump unit **52** and the engine exhaust unit **53.**

Preferably, the vehicle **1** of the invention, as observable in fig. 1, comprises an operating tool **8** provided with an articulated arm **81** configured to operate on one side of the vehicle **1.** More specifically, such articulated arm **81** has a first end **81a** rotatably associated to the support frame **10** present on the chassis **2,** while the second end **81b** is associated to the actual operating tool **82** suitable to work on the ground. Even more in detail, according to the preferred embodiment of the invention, the articulated arm **81** is associated to the support frame **10** so as to define a rotation axis **V** substantially vertical and orthogonal with respect to the aforementioned median axis **M.**

In particular, such rotation axis **V** is incident with respect to the median axis **M.**

Lastly, as observable in figs. 1 and 2, according to the preferred embodiment of the invention, the vehicle **1** of the invention comprises a load volume **9** arranged at the rear part **22** of the chassis **2.** In detail, preferably but not necessarily, such load volume **9** is a container **91.**

However, it cannot be ruled out that, according to different embodiments of the invention, the load volume **9** may comprise a different element with respect to a container **91,** for example a tank or reservoir.

Thus, in the light of the above, the vehicle **1** of the invention attains all the preset objects.

In particular, the object of providing a self-propelled vehicle capable of enabling an easier control by the operator is attained.

Even more in detail, the object of providing a self-propelled vehicle having a better balancing with respect to the vehicles of the prior art is attained.

A further object of providing a self-propelled vehicle, that is lighter and has a less complex structure with respect to the self-propelled vehicles of the prior art, is attained by the invention.

In particular, the object of providing a self-propelled vehicle with a smaller wheelbase with respect to the vehicles of the prior art is attained by the invention.

## Claims

1. Self-propelled vehicle (1) configured to be equipped with operating tools, of the type comprising:
- a chassis (2) provided with a front axle (3) and a rear axle (4) and wherein a front part (21), a rear part (22) and a central part (23) lowered with respect to said front part (21) and said rear part (22) are identified;
- a driving unit (5) comprising a main engine (51), wherein said main engine (51) is arranged at said central part (23);
- a cabin (6) arranged at said front part (21);
**characterised in that:**
- said main engine (51) is arranged along the median axis (M) of said chassis (2);
- each of said front axle (3) and said rear axle (4) is associated to a hydraulic motor (71, 72) power-supplied by said main engine (51).

2. Vehicle (1) according to claim 1, **characterised in that** said main engine (51) is an internal combustion engine.

3. Vehicle (1) according to any one of the preceding claims, **characterised in that** said main engine (51) has a rotating shaft (511) arranged parallel to said median axis (M) of said chassis (2).

4. Vehicle (1) according to any one of the preceding claims, **characterised in that** said driving unit (5) comprises a radiator unit (52) arranged at said central part (23) in lateral position with respect to said median axis (M) of said chassis (2).

5. Vehicle (1) according to any one of the preceding claims, **characterised in that** said driving unit (5) comprises a pump unit (53) arranged at said central part (23), along said median axis (M) of said chassis (2) at the front with respect to said main engine (51).

6. Vehicle (1) according to any one of the preceding claims, **characterised in that** said driving unit (5) comprises an engine exhaust unit (54) arranged at said rear part (22) of said chassis (2), along said median axis (M) of said chassis (2).

7. Vehicle (1) according to any one of the preceding claims, **characterised in that** it comprises at said front part (21) of said chassis (2), at the rear part with respect to said cabin (6), a support frame (10) for supporting said operating tools.

8. Vehicle (1) according to claim 7, **characterised in that** said support frame (10) is arranged along said median axis (M) of said chassis (2).

9. Vehicle (1) according to any one of the preceding claims, **characterised in that** it comprises an operating tool (8) provided with an articulated arm (81) configured to operate on one side of said vehicle (1).

10. Vehicle (1) according to any one of the preceding claims, **characterised in that** it comprises a load volume (9) arranged at said rear part (22) of said chassis (2).

## Patentansprüche

1. Selbstfahrendes Fahrzeug (1), so konfiguriert, dass es mit Arbeitsmitteln ausgerüstet werden kann, des Typs, der Folgendes umfasst:
- ein Chassis (2) mit einer Vorderachse (3) und einer Hinterachse (4), und wobei ein Frontteil (21), ein Heckteil (22) und ein gegenüber dem besagten Frontteil (21) und dem besagten Heckteil (22) abgesenktes Mittelteil (23) identifiziert sind;
- eine Antriebseinheit (5), die einen Hauptmotor (51) umfasst, wobei der besagte Hauptmotor (51) in dem besagten Mittelteil (23) angeordnet ist;
- eine in dem besagten Frontteil (21) angeordnete Kabine (6);
**dadurch gekennzeichnet, dass:**
- der besagte Hauptmotor (51) entlang der Mittelachse (M) des besagten Chassis (2) angeordnet ist;
- sowohl die besagte Vorderachse (3) als auch die besagte Hinterachse (4) mit einem Hydraulikmotor (71, 72) verbunden sind, der durch den besagten Hauptmotor (51) mit Strom versorgt wird.

2. Fahrzeug (1) nach Patentanspruch 1, **dadurch gekennzeichnet, dass** der besagte Hauptmotor (51) ein Verbrennungsmotor ist.

3. Fahrzeug (1) nach einem jeden der vorstehenden Patentansprüche, **dadurch gekennzeichnet, dass** der besagte Hauptmotor (51) eine Drehwelle (511) umfasst, die zu der besagten Mittelachse (M) des besagten Chassis (2) parallel angeordnet ist.

4. Fahrzeug (1) nach einem jeden der vorstehenden Patentansprüche, **dadurch gekennzeichnet, dass** die besagte Antriebseinheit (5) eine Kühlereinheit (52) umfasst, die in dem besagten Mittelteil (23) bezüglich der besagten Mittelachse (M) des besagten Chassis (2) in einer seitlichen Position angeordnet ist.

5. Fahrzeug (1) nach einem jeden der vorstehenden Patentansprüche, **dadurch gekennzeichnet, dass** die besagte Antriebseinheit (5) ein Pumpenaggregat (53) umfasst, das in dem besagten Mittelteil (23) entlang der besagten Mittelachse (M) des besagten Chassis (2) und bezüglich des besagten Hauptmotors (51) frontal angeordnet ist.

6. Fahrzeug (1) nach einem jeden der vorstehenden Patentansprüche, **dadurch gekennzeichnet, dass** die besagte Antriebseinheit (5) eine Abgasanlage (54) umfasst, die in dem besagten Heckteil (22) des besagten Chassis (2) entlang der besagten Mittelachse (M) des besagten Chassis (2) angeordnet ist.

7. Fahrzeug (1) nach einem jeden der vorstehenden Patentansprüche, **dadurch gekennzeichnet, dass** es in dem besagten Frontteil (21) des besagten Chassis (2), bezüglich der Kabine (6) im hinteren Teil, einen Halterahmen (10) zur Aufnahme der besagten Arbeitsmittel umfasst.

8. Fahrzeug (1) nach Patentanspruch 7, **dadurch gekennzeichnet, dass** der besagte Halterahmen (10) entlang der besagten Mittelachse (M) des besagten Chassis (2) angeordnet ist.

9. Fahrzeug (1) nach einem jeden der vorstehenden Patentansprüche, **dadurch gekennzeichnet, dass** es ein Arbeitsmittel (8) umfasst, das mit einem Gelenkausleger (81) versehen ist, der so konfiguriert ist, dass er an einer Seite des besagten Fahrzeugs (1) arbeiten kann.

10. Fahrzeug (1) nach einem jeden der vorstehenden Patentansprüche, **dadurch gekennzeichnet, dass** es einen in dem besagten Heckteil (22) des besagten Chassis (2) angeordneten Laderaum (9) umfasst.

## Revendications

1. Véhicule automoteur (1) configuré pour être équipé d'outils de travail, du type comprenant:
- un châssis (2) pourvu d'un essieu avant (3) et d'un essieu arrière (4) et où une partie avant (21), une partie arrière (22) et une partie centrale (23) abaissée par rapport à ladite partie avant (21) et à ladite partie arrière (22) sont identifiées;
- un groupe moteur (5) comprenant un moteur principal (51), où ledit moteur principal (51) est disposé dans ladite partie centrale (23);
- une cabine (6) disposée à hauteur de ladite partie avant (21);
**caractérisé en ce que:**
- ledit moteur principal (51) est disposé le long de l'axe médian (M) dudit châssis (2);
- chacun dudit essieu avant (3) et dudit essieu arrière (4) est associé à un moteur hydraulique (71, 72) alimenté par ledit moteur principal (51).

2. Véhicule (1) selon la revendication 1, **caractérisé en ce que** ledit moteur principal (51) est un moteur à combustion interne.

3. Véhicule (1) selon l'une quelconque des revendications précédentes, **caractérisé en ce que** ledit moteur principal (51) présente un arbre de rotation (511) disposé parallèle audit axe médian (M) dudit châssis (2).

4. Véhicule (1) selon l'une quelconque des revendications précédentes, **caractérisé en ce que** ledit groupe moteur (5) comprend un groupe radiateur (52) disposé à hauteur de ladite partie centrale (23) en position latérale par rapport audit axe médian (M) dudit châssis (2).

5. Véhicule (1) selon l'une quelconque des revendications précédentes, **caractérisé en ce que** ledit groupe moteur (5) comprend un groupe de pompe (53) disposé à hauteur de ladite partie centrale (23), le long dudit axe médian (M) dudit châssis (2) à l'avant par rapport audit moteur principal (51).

6. Véhicule (1) selon l'une quelconque des revendications précédentes, **caractérisé en ce que** ledit groupe moteur (5) comprend un groupe d'échappement de moteur (54) disposé à hauteur de ladite partie arrière (22) dudit châssis (2), le long dudit axe médian (M) dudit châssis (2).

7. Véhicule (1) selon l'une quelconque des revendications précédentes, **caractérisé en ce qu'il** comprend à hauteur de ladite partie avant (21) dudit châssis (2), dans la partie arrière par rapport à la dite cabine (6), un cadre de support (10) pour le soutien desdits outils de travail.

8. Véhicule (1) selon la revendication 7, **caractérisé en ce que** ledit cadre de support (10) est disposé le long dudit axe médian (M) dudit châssis (2).

9. Véhicule (1) selon l'une quelconque des revendications précédentes, **caractérisé en ce qu'**il comprend un outil de travail (8) pourvu d'un bras articulé (81) configuré pour fonctionner sur un côté dudit véhicule (1).

10. Véhicule (1) selon l'une quelconque des revendications précédentes, **caractérisé en ce qu'**il comprend un volume de chargement (9) disposé à hauteur de ladite partie arrière (22) dudit châssis (2).
